# EUROPÄISCHE PATENTANMELDUNG

(11) **EP 1 422 098 A1**
(43) Veröffentlichungstag der Anmeldung: **26.05.2004**
(21) Anmeldenummer: 03020219.6
(22) Anmeldetag: 06.09.2003
(51) Int. Cl.: B60J 7/10, B60J 7/19

(54) **Abnehmbares Dach für ein Kraftfahrzeug**

(30) Priorität: 20.11.2002 DE 10254130
(71) Anmelder: Dr.Ing. h.c.F. Porsche Aktiengesellschaft, 70435 Stuttgart (DE)
(72) Erfinder: Homann, Bodo, 71296 Heimsheim (DE); Scholz, Andre, 75446 Wiernsheim (DE)

(57) **Zusammenfassung**

Dieses abnehmbare Dach (9) ist für ein Kraftfahrzeug, insbesondere einen Personenkraftwagen (1) bestimmt, das eine Öffnung zwischen einem Windschutzscheibenrahmen (3) und einer bspw. hinter Fahrgastsitzen (4,5) sich erstreckenden Aufbaustruktur (6) eines Aufbaus abdeckt, aus formsteifem Werkstoff besteht und einerseits mittels einer formschlüssig wirkenden eine Fixierungsvorrichtung umfassenden Fixierungssystems (11) mit dem Windschutzscheibenrahmen (3) zusammenarbeitet.

Zur Optimierung der Verbindung des Dachs (9) mit dem Windschutzscheibenrahmen (3) weist das Fixierungssystem (11) des Dachs (9) eine erste Fixierungseinrichtung (15) und eine zweite Fixierungseinrichtung (16) auf. Beide Fixierungseinrichtungen (15,16) sind in Fahrzeughöhenrichtung (F-F) um ein Abstandsmaß (Am) versetzt zueinander angeordnet, und sie werden durch eine Bewegung des Dachs (9) in Fahrtrichtung (D) in Eingriff gebracht.

## Beschreibung

Die Erfindung bezieht sich auf ein abnehmbares Dach für ein Kraftfahrzeug, insbesondere einen Personenkraftwagen nach den Oberbegriff des Patentanspruchs 1.

Ein bekanntes abnehmbares Dach für Kraftfahrzeuge, DE 14 55 743, umfasst auf einer einem Windschutzscheibenrahmen zugekehrten Seite eine einzige formschlüssig arbeitende Fixierungsvorrichtung. Die Fixierungsvorrichtung wird durch einen Lagerzapfen am Dach und ein Aufnahmebohrung am Windschutzscheibenrahmen gebildet. Der Lagerzapfen und die Aufnahmebohrung sind an speziellen Konsolen angebracht, die vom Dach bzw. vom Windschutzscheibenrahmen weggeführt sind und in den Fahrgastraum hineinragen.

In der DE 94 06 435 wird ein Dach behandelt, das zwei in einer Mittellängsebene zusammengesetzte Dachteile aufweist, die am Windschutzscheibenrahmen allein über eine Verriegelungsvorrichtung gehalten wird. Die Verriegelungsvorrichtung ist mit einem Drehgriff versehen, der in einer Schließstellung mit einer Nase eine Spannrampe einer Innenverkleidung untergreift.

Schließlich geht aus der DE 41 37 344 A1 ein demontierbares Dach für einen Personenkraftwagen hervor, das zwischen einem oberen Trägerteil eines Windschutzscheibenrahmens und einer hinter Lehnen von Fahrzeugsitzen Aufbaurahmenstruktur verläuft. Die Aufbaurahmenstruktur umfasst eine Rollbügelvorrichtung, die einen Fahrgastraum des Personenkraftwagens quer zur Fahrzeuglängsrichtung überspannt. Das Dach besteht aus einem formsteifen Werkstoff und ist als ein einziges Bauteil ausgeführt, wobei das Dach unter Zwischenschaltung eines Fixierungssystems und eines Verriegelungssystems am Trägerteil des Windschutzscheibenrahmens bzw. an der Aufbaustruktur in Lage gehalten wird.

Aufgabe der Erfindung ist es ein abnehmbares Dach für einen Personenkraftwagen zu schaffen, das mittels eines Fixierungssystems sicher an einem Windschutzscheibenrahmen gehalten ist. Dabei sollte aber auch sicher gewährleistet sein, dass das Aufsetzen und das Abnehmen des Dachs einfach ist und sich das Fixierungssystem durch gute Funktion und leicht realisierbare Bauteile auszeichnet.

Erfindungsgemäß wird diese Aufgabe durch die Merkmale des Patentanspruchs 1 gelöst.
Weitere, die Erfindung ausgestaltend Merkmale sind in den Unteransprüchen enthalten.

Die mit der Erfindung hauptsächlich erzielten Vorteile sind darin zu sehen, dass das Dach bzw. seine Dachelemente in Verbindung mit der ersten Fixierungseinrichtung und der zweiten Fixierungseinrichtung sich schnell und sinnfällig am Windschutzscheibenrahmen in Einbaulage und vice versa bringen lassen. Dabei sind die Komponenten und Einrichtungen der beiden Fixierungseinrichtungen mit vertretbarem Aufwand zu realisieren, und sie nehmen, weil gezielt angeordnet, eine weitgehend eingelassene und versenkte Lage ein. Dass der Lagerzapfen mittels der elastischen Einrichtung in Lage gehalten ist, ermöglicht den Ausgleich von Toleranzen und Relativbewegungen zwischen dem Windschutzscheibenrahmen und der Aufbaurahmenstruktur, die durch einen Rollbügel dargestellt sein kann. Die Winkellagen des Lagerzapfens der zweiten Fixierungseinrichtung zu der Horizontalen sowie des besagten Lagerzapfens zu der flanschartigen Dachverlängerung der ersten Fixierungseinrichtung bewirken ein optimiertes Ausrichten des Daches bzw. der Dachelemente zum Windschutzscheibenrahmen und auch zu dem Dichtkörper der ersten Fixierungseinrichtung. Außerdem wird durch die Dichtabschnitte des Dichtkörpers eine ausgezeichnete Dichtleistung erzielt.

In der Zeichnung wird ein Ausführungsbeispiel der Erfindung gezeigt, das nachstehend näher erläutert wird.

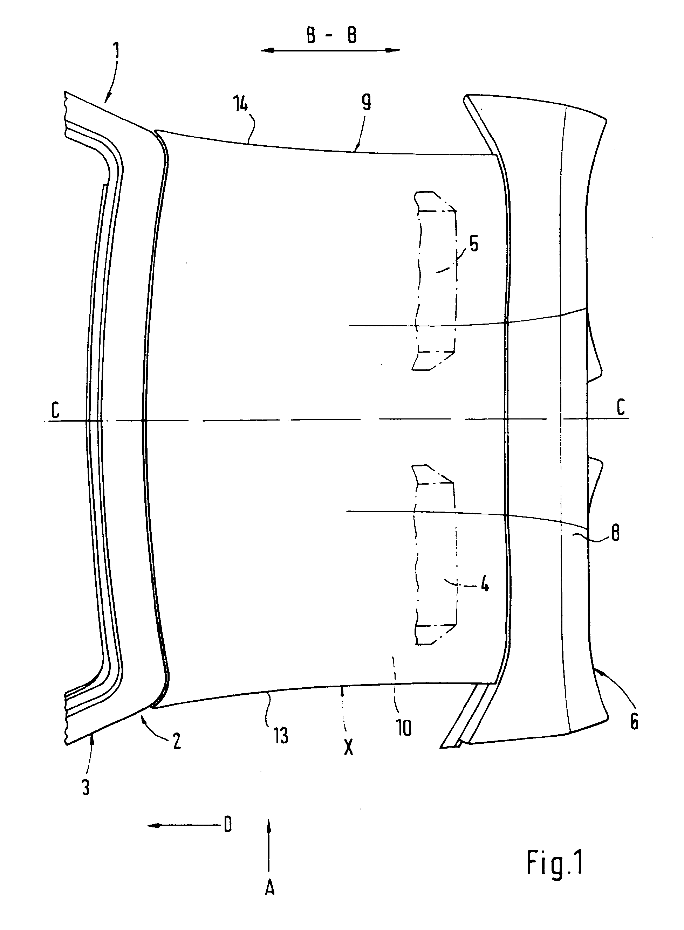

Es zeigen
- Fig. 1: eine Ansicht von oben auf einen Personenkraftwagen mit einem abnehmbaren Dach,
- Fig. 2: eine Ansicht in Pfeilrichtung A der Fig.1,

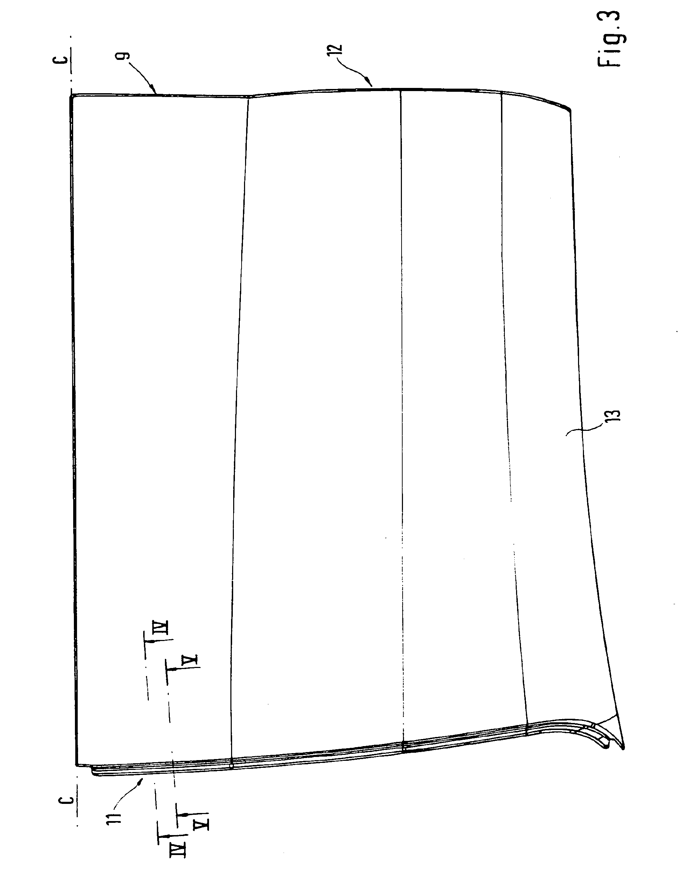

- Fig. 3: eine Einzelheit X der Fig.1 in größerem Maßstab,
- Fig. 4: einen Schnitt nach der Linie IV-IV der Fig. 2 in größerem Maßstab,
- Fig. 5: einen Schnitt nach der Linie V-V der Fig. 2 in größerem Maßstab,
- Fig. 6: eine Schnitt nach der Linie VI-VI der Fig. 5.

Ein Personenkraftwagen 1 umfasst einen offenen Aufbau 2 mit einem Windschutzscheibenrahmen 3 und einer sich hinter Fahrgastsitzen 4, 5 erstreckenden hintere Aufbaurahmenstruktur 6, die eine einen Fahrgastraum 7 überspannende Rollbügelvorrichtung 8 umfasst. Der Bereich zwischen Windschutzscheibenrahmen 3 und Rollbügelvorrichtung 8 ist frei von in Fahrzeuglängsrichtung B-B verlaufenden den Aufbau 2 verstärkenden Trägerstrukturen. Dies bedeutet, dass sämtliche auf den Aufbau 2 einwirkende Biege- und Torsionsmomente von einer nicht gezeigten Bodenanlage mit ihren Trägern aufzunehmen ist, so dass etwa im Fahrbetrieb des Personenkraftwagens auftretenden Relativbewegungen zwischen Windschutzscheibenrahmen 3 und Rollbügelvorrichtung 8 bei der Verbindung eines formsteifen abnehmbaren Dachs 9 mit den zuletzt genannten durch konstruktive Maßnahmen Rechnung getragen ist.

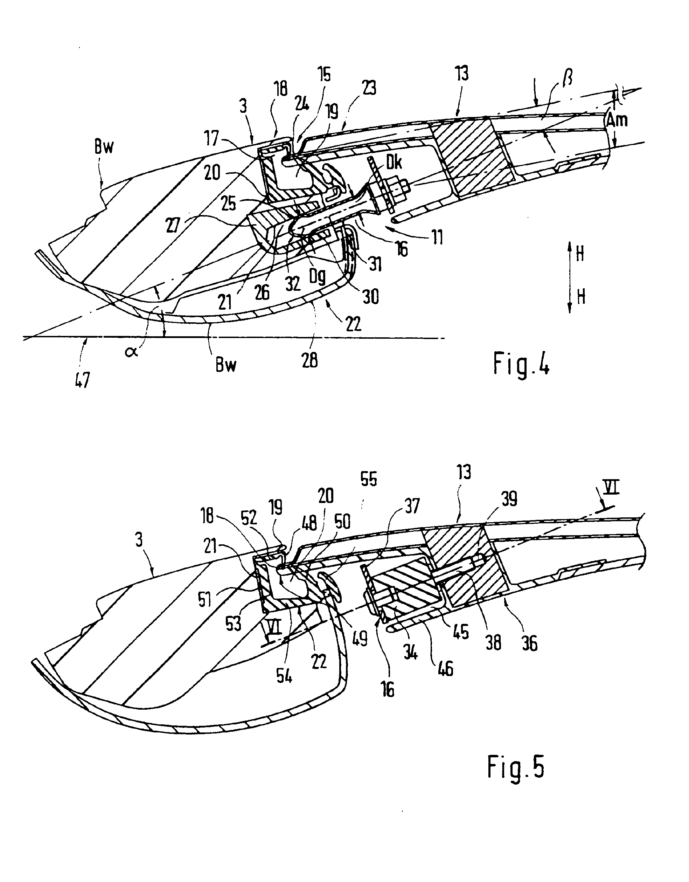

Das Dach 9 besteht aus festem Kunststoff z.B. hochbelastbarer Gattung, insbesondere faserverstärktem Kunststoff - CFK -, deckt eine Öffnung 10 zwischen dem Windschutzscheibenrahmen 3 und der Rollbügelvorrichtung 8 bzw. hinterer Aufbaurahmenstruktur 6 ab, und es ist mit dem Aufbau 2 unter Zwischenschaltung eines formschlüssig wirkenden Fixierungssystems 11 und eines Verriegelungssystems 12 verbunden; ein Beispiel eines Verriegelungssystems ist der eingangs genannten DE 14 55 743 in Fig. 4 zu entnehmen. Darüber hinaus umfasst das Dach 9 zwei in einer Mittellängsebene C-C ohne Verbindungselemente, also scharnierlos zusammengesetzte Dachelemente 13,14. Jedes Dachelement z. B. 13 wirkt mit einer ersten Fixierungseinrichtung 15 und einer zweiten Fixierungseinrichtung 16 des Fixierungssystems 11 mit dem Windschutzscheibenrahmen 3 und dem Verriegelungssystems 12 mit der Rollbügelvorrichtung 8 zusammen.

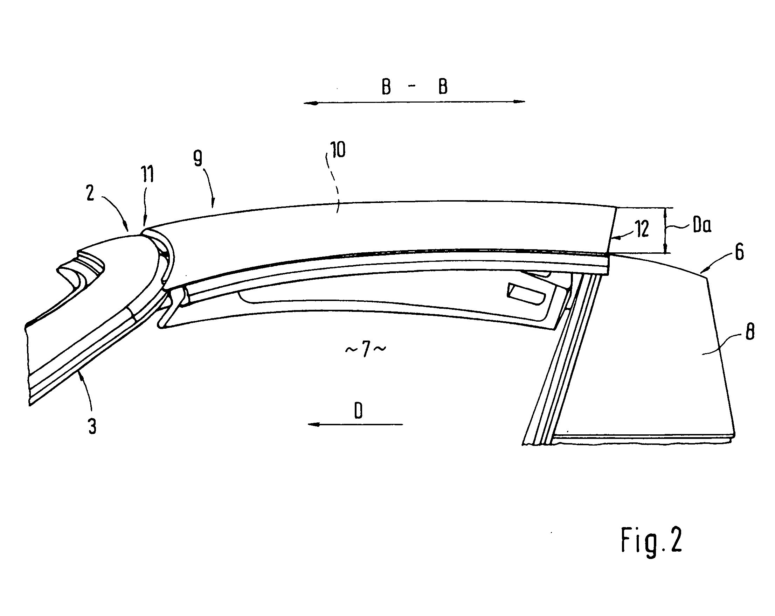

Das Dachelement 13 und das Dachelement 14 können in einem nicht dargestellten Stauraum des Personenkraftwagens 1 in gestapelter Form untergebracht werden; der Personenkraftwagen ist im offenen Zustand. Zur Montage des Dachelements 13 wird es durch eine in Fahrtrichtung D gerichtet Bewegung in Eingriff mit den Fixierungseinrichtung 15 und 16 gebracht - Fig. 2 -. Dabei ist das Dachelement 13 gegenüber der Rollbügelvorrichtung 8 etwas d.h. mit dem Maß Da angehoben. Nach definiertem Absenken des Dachelements 13 nimmt es seine Konstruktionslage ein, und das Verriegelungssystem 12 ist wirksam; die Demontage des Dachelements 13 folgt in umgekehrter Reihenfolge; für die Handhabung des Dachelements 14 sind vergleichbare Montageschritte erforderlich.

Die erste Fixierungseinrichtung 15 ist nach den Fig. 4 und 5, die Längsschnitte wiedergeben, mit einer sich in Fahrzeuglängsrichtung B-B erstreckenden flanschartigen vorderen Dachverlängerung 17 des Dachelements 13 versehen, die eine Außenschenkelwand 18 einer zum Dachelement 13 hin gerichteten offen U-förmigen Aufnahme 19 untergreift. Die Aufnahme 19 umfasst auch noch eine Stegwand 20 sowie eine Innenschenkelwand 21, und sie ist Bestandteil eines oberen Querträgers 22 des Windschutzscheibenrahmens 3. Die Dachverlängerung 17 ist gegenüber einer bündig zur Außenschenkelwand 18 verlaufenden Außenwand 23 des Dachelements 13 als Absatz 24 ausgeführt.

Die zweite Fixierungseinrichtung 16 weist einen Lagerzapfen 25 auf, der in eine Aufnahmebohrung 26 hineinragt, welcher Lagerzapfen 25 am Dachelement 13 und welche Aufnahmebohrung 26 am Querträger 24 des Windschutzscheibenrahmens 3 vorgesehen sind. Die Aufnahmebohrung 26 ist in einen metallischen Einsatz 27 eingearbeitet, der in den z.B. aus faserverstärktem Kunststoff bestehenden Windschutzscheibenrahmen 3 bzw. Querträger 24 in der Weise integriert ist, dass besagter Einsatz 26 in den Querträger 26 im wesentlichen im vollen Umfang eingebettet ist bzw. von Begrenzungswänden Bw des Windschutzscheibenrahmens 3 umgeben wird. Unterhalb des Lagerzapfens 25 ist der Querträger 24 mit einem gepolsterten Trägerabschnitt 28 versehen. Der Lagerzapfen 25 weist benachbart seinem freien Ende 29 eine Führungsanformung 30 einem größten Durchmesser Dg, von dem aus sie einerseits in einen Schaft 31 mit einem kleineren Durchmesser Dk übergeht und andererseits als konische Spitze 32 ausläuft.

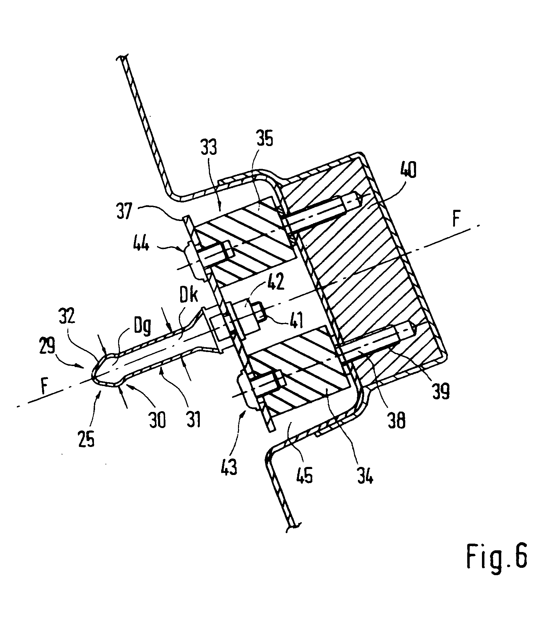

In den Fig. 5 und 6 ist dargestellt, dass der Lagerzapfen 25 unter Vermittlung einer elastischen Einrichtung 33 am Dachelement 13 befestigt ist, die mit zwei in Fahrzeugquerrichtung E-E beabstandeten Elastikkörper 34 und 35 vorzugsweise mit kreiszylindrischem Querschnitt versehen ist, die zum einen an einem Querträger 36 des Dachelements 13 gehalten und zum anderen mit einem plattenartigen Halteträger 37 für den Lagerzapfen 26 verbunden sind. Jeder Elastikkörper z.B. 34 ruht mittels eines Gewindezapfens 38 in einer Gewindebohrung 39 eines metallischen Einsatzes 40, der in den Querträger 36 des Dachelements 13 in vollem Umfang verdeckt eingearbeitet ist. Der Lagerzapfen 26 verläuft in einer Mittelängsebene E - E zwischen den Elastikkörpern 34 und 35 und wird mittels eines Gewindezapfens 41 und einer Schraubenmutter 42 am Halteträger 37 gehalten, wobei der Halteträger 37 unter Zwischenschaltung von Schrauben 43 und 44 an den Elastikkörpern 34 und 35 befestigt ist. Um die Elastikkörper 34 und 35, eventuell auch den Halteträger 37 günstig im Dachelement 13, und zwar weitgehend versenkt unterzubringen, ist letzteres mit einer Ausnehmung 45 versehen. Gegenüber dem Fahrgastraum 7 sind die Elastikkörper 34,35 und der Halteträger 37 mittels einer inneren Begrenzungswand 46 abgedeckt, die vom Querträger 36 weggeführt ist und die Ausnehmung 45 begrenzt. An jedem Dachelement 13 und 14 können zwei in Fahrzeugquerrichtung H-H mit Abstand zueinander vorgesehene Fixierungssysteme 11 angebracht werden, wovon jedes Fixierungssystem 11 mit einer ersten Fixierungsvorrichtung 15 und einer zweiten Fixierungsvorrichtung 16 ausgestattet sein kann; letztere sind in Fahrzeughöhenrichtung F-F versetzt angeordnet, was durch das Abstandsmaß Am verdeutlicht wird.

Um eine gezielte Funktion der ersten Fixierungseinrichtung 15 und der zweiten Fixierungseinrichtung 16 sicherzustellen verläuft der Lagerzapfen 26 - im Längsschnitt nach Fig. 4 gesehen - im spitzen Winkel α (ca. 15° bis 20°) zu einer Horizontalen 47. Dabei erstrecken sich der Lagerzapfen 26 der zweiten Fixierungseinrichtung 15 und die vordere flanschartige Dachverlängerung 18 im spitzen Winkel β (ca. 8° bis 12°) zueinander.

Gemäß den Fig. 4 und 5 sind zwischen der Außenschenkelwand 19 und der Dachverlängerung 18 ein erster Dichtabschnitt 48 und einer Innenwand 49 des Dachelements 13 sowie der Innenschenkelwand 22 der U-förmigen Aufnahme 20 ein zweiter Dichtabschnitt 50 angeordnet. Der erste Dichtabschnitt 48 und der zweite Dichtabschnitt 50 sind Bestandteil eines Dichtkörpers 51, der sich mit Anlagewänden 52,53,54 entlang der Außenschenkelwand 19, der Stegwand 21 und der Innenschenkelwand 22 der Aufnahme 20 erstreckt. Schließlich ist ein weiteres wesentliches Merkmal des Dichtkörpers 51 ein vom zweiten Dichtabschnitt 50 weggeführter Steg 55, der mit besagtem zweiten Dichtabschnitt 50 eine Art Rinne zur gezielten Ableitung von angesammeltem Wasser bilden.

## Patentansprüche

1. Abnehmbares Dach für ein Kraftfahrzeug, insbesondere Personenkraftwagen, das eine Öffnung zwischen einem Windschutzscheibenrahmen und einer bspw. hinter Fahrgastsitzen sich erstreckenden Aufbaurahmenstruktur eines Aufbaus des Personenkraftwagens abdeckt, aus formsteifem Werkstoff besteht und mittels eines formschlüssig wirkenden eine Fixierungsvorrichtung aufweisenden Fixierungssystems mit dem Windschutzscheibenrahmen zusammenarbeitet, **dadurch gekennzeichnet, dass** das Fixierungssystem (11) des Dachs (9) eine erste Fixierungseinrichtung (15) und eine zweiten Fixierungseinrichtung (16) umfasst, welche Fixierungseinrichtungen (15 und 16) in Fahrzeughöhenrichtung (F - F) mit einem Abstandsmaß (Am) versetzt zueinander angeordnet sind und durch eine Bewegung des Dachs (9) in Fahrtrichtung (D) in Eingriff gebracht werden.

2. Abnehmbares Dach nach Anspruch 1, **dadurch gekennzeichnet, dass** die erste Fixierungseinrichtung (15) eine sich in Fahrzeuglängsrichtung (B-B) erstreckende flanschartige vordere Dachverlängerung (17) des Dachs (9) aufweist, die einen Außenschenkelwand (18) einer zum Dach (9) hin gerichteten offenen U-förmigen Aufnahme (19) untergreift.

3. Abnehmbares Dach nach Anspruch 2, **dadurch gekennzeichnet, dass** die zweite Fixierungseinrichtung (16) wenigstens einen Lagerzapfen (26) umfasst, der in eine Aufnahmebohrung (27) hineinragt.

4. Abnehmbares Dach nach Anspruch 3, **dadurch gekennzeichnet, dass** der Lagerzapfen (25) am Dach (9) und die Aufnahmebohrung (26) am Windschutzscheibenrahmen (3) vorgesehen sind.

5. Abnehmbares Dach nach Anspruch 4, **dadurch gekennzeichnet, dass** die Aufnahmebohrung (26) in einem bspw. metallischem Einsatz (27) vorgesehen ist, der in den Windschutzscheibenrahmen (3) integriert ist, dergestalt, dass der Einsatz (27) im wesentlichen von Begrenzungswänden (bzw.) des Windschutzscheibenrahmens (3) umgeben ist.

6. Abnehmbares Dach nach Anspruch 4, **dadurch gekennzeichnet, dass** der Lagerzapfen (25) benachbart seinem freien Ende (29) eine Führungsanformung (30) mit einem größten Durchmesser (Dg) aufweist, von dem aus der Lagerzapfen (26) einerseits in einen Schaft (31) mit einem kleineren Durchmesser (Dk) übergeht und andererseits als konische Spitze (32) ausläuft.

7. Abnehmbares Dach nach Anspruch 3, **dadurch gekennzeichnet, dass** der Lagerzapfen (25) unter Vermittlung einer elastischen Einrichtung (33) in Lage gehalten ist.

8. Abnehmbares Dach nach den Ansprüchen 3 und 7, **dadurch gekennzeichnet, dass** die elastische Einrichtung (33) zwei in Fahrzeugquerrichtung (H - H) beabstandete Elastikkörper (34 und 35) bspw. mit kreiszylindrischem Querschnitt umfasst, die einerseits an einem Querträger(36) des Dachs (9) gehalten und andererseits mit einem plattenartigen Halteträger (37) für den Lagerzapfen (25) verbunden sind.

9. Abnehmbares Dach nach Anspruch 8, **dadurch gekennzeichnet, dass** jeder Elastikkörper (34 oder 35) mittels eines Gewindezapfens (38) in einer Gewindebohrung (39) in einem beispielsweise metallischen Einsatz (40) des Dachs (9) ruht.

10. Abnehmbares Dach nach Anspruch 8, **dadurch gekennzeichnet, dass** der Halteträger (37) unter Vermittlung von Schrauben (43,44) mit den Elastikkörpern (34 und 35) verbunden ist.

11. Abnehmbares Dach nach Anspruch 8, **dadurch gekennzeichnet, dass** der Lagerzapfen (25) in einer Mittellängsebene (E-E) zwischen den Elastikkörpern (34 und 35) verläuft und unter Vermittlung eines Gewindezapfens (41) und einer Schraubenmutter (42) mit dem Halteträger (37) verbunden ist.

12. Abnehmbares Dach nach einem oder mehreren der vorangehenden Ansprüche, **dadurch gekennzeichnet, dass** die elastische Einrichtung (33) mit den Elastikkörpern (34 und 35) und dem Halteträger (37) in einer Ausnehmung (45) des Dachteils (13 oder 14) zumindest weitgehend versenkt angeordnet sind.

13. Abnehmbares Dach nach einem oder mehreren der vorangehenden Ansprüchen, dass Dach zwei in einer Mittellängsebene des Personenkraftwagens zusammengesetzte Dachelemente (13 oder 14) aufweist, wobei an jedem Dachelement mindestens ein Lagerzapfen (25) mit Elastikkörpern (34 und 35) vorgesehen ist, der mit der korrespondierenden Aufnahmebohrung (26) des Windschutzscheibenrahmens (3) zusammenarbeitet.

14. Abnehmbares Dach nach einem oder mehreren der vorangehenden Ansprüchen, **dadurch gekennzeichnet, dass** der Lagerzapfen (25) der zweiten Fixierungseinrichtung (16) - im Längsschnitt gesehen - im spitzen Winkel (α) zu einer Horizontalen (47) verläuft.

15. Abnehmbares Dach nach einem oder mehreren der vorangehenden Ansprüchen, dass der Lagerzapfen (25) der zweiten Fixierungseinrichtung (16) und die flanschartige Dachverlängerung (17) der ersten Fixierungseinrichtung (15) - im Längsschnitt gesehen - im spitzen Winkel (β) zueinander verlaufen.

16. Abnehmbares Dach nach Anspruch 2, **dadurch gekennzeichnet, dass** die Dachverlängerung (17) - im Längsschnitt gesehen - gegenüber einer bündig zur Außenschenkelwand (18) der Aufnahme (19) verlaufenden Außenwand (23) des Dachelements (13 oder 14) als Absatz (24) ausgeführt ist.

17. Abnehmbares Dach nach Anspruch 16, **dadurch gekennzeichnet, dass** - im Längsschnitt gesehen - zwischen der Außenschenkelwand (18) und dem Dachelement (13 oder 14) ein erster Dichtabschnitt (48) und zwischen einer Innenwand (49) des Dachelements (13 oder 14) und einer Innenschenkelwand (21) der Aufnahme (19) ein zweiter Dichtabschnitt (50) vorgesehen sind.

18. Abnehmbares Dach nach Anspruch 17, **dadurch gekennzeichnet, dass** der erste Dichtabschnitt (48) und der zweite Dichtabschnitt (50) Bestandteil eines Dichtkörpers (51) sind, der sich mit Anlagewänden (52,53,54) entlang der Außenschenkelwand (18) einer Stegwand (20) und der Innenschenkelwand (21) der Aufnahme (19) erstreckt.

19. Abnehmbares Dach nach Anspruch 18, **dadurch gekennzeichnet, dass** der Dichtkörper (51) einen vom zweiten Dichtabschnitt (50) weggeführten Steg (55) aufweist, wobei der zweite Dichtabschnitt (50) und der Steg (55) eine Art Rinne bilden.
